# FASCICULE DE BREVET EUROPEEN

(11) **EP 1 977 876 B1**
(45) Date de publication et mention de la délivrance du brevet: **14.03.2012**
(21) Numéro de dépôt: 08154035.3
(22) Date de dépôt: 03.04.2008
(51) Int. Cl.: B29C 47/32, B29D 30/14, B29D 30/28

(54) **Dispositif, installation et procédé pour l'application d'une bande de gomme sur une ébauche de pneumatique**
Vorrichtung, Anlage und Verfahren zum Aufbringen eines Gummistreifens auf einen Reifenrohling
Device, installation and method for applying a strip of rubber on a tyre blank

(30) Priorité: 05.04.2007 FR 0754298
(43) Date de publication de la demande: 08.10.2008
(73) Titulaire: Société de Technologie Michelin, 63000 Clermont-Ferrand (FR); MICHELIN Recherche et Technique S.A., 1763 Granges-Paccot (CH)
(72) Inventeur: Cappa, Bernard, 63370 Lemdes (FR); Letocart, Arnaud, 63460 Combronde (FR)
(74) Mandataire: Reynaud, Georges

(56) Documents cités:
- EP-A- 1 095 798
- EP-A- 1 754 592
- DE-A1- 4 034 144
- GB-A- 2 249 518
- US-A- 4 174 200
- US-A- 5 221 406
- US-A1- 2005 161 163

## Description

La présente invention concerne un dispositif, une installation et un procédé pour l'application d'une bande de gomme sur une ébauche de pneumatique.

Elle s'applique en particulier, mais non exclusivement, à un pneumatique pour véhicule à deux roues.

II est connu d'appliquer une bande de gomme sur une ébauche de pneumatique au moyen d'une installation comprenant, à un premier poste, au moins une extrudeuse de gomme pour la fabrication d'une bande de gomme et, à second poste, un support rotatif de l'ébauche pour l'application de la bande de gomme sur l'ébauche.

L'extrudeuse de l'installation est munie d'un orifice d'extrusion (pour la mise en forme de la bande de gomme et la sortie de cette bande de l'extrudeuse) qui est avantageusement délimité par un rouleau monté rotatif sur l'extrudeuse.

Dans certains cas, après fabrication et avant application sur l'ébauche, la bande de gomme est stockée temporairement sur une bobine de stockage. Dans d'autres cas, la bande de gomme est directement transférée du premier poste au second poste, sans stockage intermédiaire, en passant le cas échéant à travers des moyens de régulation de débit.

Ces cas sont décrits dans les documents EP-A-1 095 798 et DE 40 34 144 A1.

Dans tous les cas évoqués ci-dessus, l'extrusion et l'application de la bande sont réalisées à des postes différents, ce qui nécessite, d'une part, un déplacement de la bande de gomme extrudée d'un poste de fabrication à un poste d'application et, d'autre part, avant l'application de la bande sur l'ébauche, une enduction de la bande de gomme avec un produit facilitant l'adhésion de la bande sur l'ébauche.

D'autres dispositifs et installations pour l'application d'une bande de gomme sur une ébauche de pneumatique sont décrits dans les documents US 2005/161163 A1, US-A-5 221 406, EP-A-1 754 592, GB-A-2 249 518 et US-A-4 174 200.

La présente invention a pour but de simplifier la fabrication de l'ébauche de pneumatique, notamment en évitant d'avoir à déplacer et enduire la bande de gomme entre deux postes, ceci en réduisant autant que possible le coût de fabrication d'un pneumatique.

A cet effet, l'invention a pour objet un dispositif pour l'application d'une bande de gomme sur une ébauche de pneumatique, du type comprenant au moins une extrudeuse de gomme munie d'un orifice d'extrusion, pour la mise en forme de la bande de gomme et la sortie de cette bande de l'extrudeuse, cet orifice d'extrusion étant délimité par un rouleau monté rotatif sur l'extrudeuse, caractérisé en ce qu'il comprend des moyens de sollicitation du rouleau contre l'ébauche de façon que ce rouleau forme un applicateur de la bande de gomme contre l'ébauche.

Un tel dispositif permet, sur un même poste, d'extruder la bande de gomme et de l'appliquer sur l'ébauche de pneumatique. En effet, les moyens de sollicitation du rouleau contre l'ébauche permettent d'appliquer la bande de gomme sur l'ébauche directement à la sortie de l'extrudeuse. Il n'est alors plus nécessaire de déplacer la bande d'un poste à un autre.

De plus, la bande de gomme étant relativement chaude à la sortie de l'extrudeuse, elle adhère facilement à l'ébauche sous l'action du rouleau formant applicateur. Il n'est donc pas nécessaire d'enduire cette bande avec un produit facilitant son adhésion.

Selon une caractéristique optionnelle du dispositif selon l'invention, le rouleau a une forme générale de révolution engendrée par rotation d'une courbe convexe autour d'un axe formant axe de rotation de ce rouleau, de façon que le diamètre du rouleau soit maximal sensiblement au milieu de ce rouleau.

La forme convexe du rouleau permet, lors de l'application de la bande sur l'ébauche de chasser l'air susceptible de s'intercaler entre la bande et l'ébauche.

Selon une autre caractéristique optionnelle du dispositif selon l'invention, l'orifice forme l'extrémité débouchante d'un canal d'écoulement de gomme, ce canal étant muni d'au moins une saillie de freinage localisé de l'écoulement de la gomme.

La gomme s'écoulant dans le canal dans un état viscoélastique, elle est sensible aux effets de bord tendant à freiner l'écoulement de la gomme en contact avec le contour du canal. Les saillies de freinage localisé permettent de freiner l'écoulement de la gomme au centre du canal de façon à former un front de gomme relativement plan.

Selon d'autres caractéristiques optionnelles du dispositif selon l'invention :
- L'extrudeuse est montée articulée autour d'un axe de façon à former un levier sur lequel agissent les moyens de sollicitation du rouleau.
- Des moyens de rouletage de la bande de gomme contre l'ébauche sont solidaires de l'extrudeuse de façon à être sollicités contre l'ébauche conjointement avec le rouleau. Ces moyens de rouletage permettent d'assurer une application parfaite de la bande de gomme sur l'ébauche.
- L'axe d'articulation de l'extrudeuse est porté par un support faisant partie d'un ensemble robotisé. Un tel ensemble permet d'adapter le dispositif selon l'invention à des pneumatiques présentant des caractéristiques géométriques différentes. En effet, l'ensemble robotisé permet de déplacer l'extrudeuse par rapport à l'ébauche et donc de s'adapter à plusieurs types d'ébauche.
- Le dispositif comprend deux extrudeuses munies chacune d'un rouleau et de moyens de sollicitation du rouleau contre l'ébauche, les deux extrudeuses étant disposées de part et d'autre d'un plan axial médian de l'ébauche de façon, l'ébauche ayant une forme générale de révolution, à pouvoir appliquer des bandes de gomme sur deux parties de l'ébauche symétriques par rapport au plan axial médian de cette ébauche.

L'invention a également pour objet une installation pour l'application d'une bande de gomme sur une ébauche de pneumatique, caractérisée en ce qu'elle comprend un dispositif tel que défini ci-dessus et un support rotatif de l'ébauche.

L'invention a encore pour objet un procédé pour l'application d'une bande de gomme sur une ébauche de pneumatique au moyen d'au moins une extrudeuse de gomme munie d'un orifice d'extrusion, pour la mise en forme de la bande de gomme et la sortie de cette bande de l'extrudeuse, cet orifice d'extrusion étant délimité par un rouleau monté rotatif sur l'extrudeuse, caractérisé en ce que l'on sollicite le rouleau contre l'ébauche de façon que ce rouleau forme un applicateur de la bande de gomme contre l'ébauche.

Un tel procédé permet d'appliquer la bande sur l'ébauche lorsque cette ébauche est en rotation sur le support.

Selon une caractéristique optionnelle du procédé selon l'invention, l'ébauche étant supportée par un support rotatif, on synchronise entre elles les vitesses de rotation des support et rouleau rotatifs.

On peut ainsi notamment adapter les vitesses de rotation des support et rouleau rotatifs, en fonction, entre autres, des paramètres géométriques du pneumatique et du débit de l'extrudeuse. En synchronisant les vitesses de rotation des support et rouleau rotatifs, on adapte donc la vitesse du rouleau à une vitesse de rotation de l'ébauche.

Selon une caractéristique optionnelle du procédé selon l'invention, la bande étant appliquée sur l'ébauche de pneumatique le long d'un trajet circulaire tel que la bande présente le long de ce trajet des bords radialement interne et externe de rayons différents, on synchronise entre elles les vitesses de rotation des support et rouleau rotatifs de façon que la vitesse circonférentielle du rouleau soit sensiblement égale à la vitesse circonférentielle du bord interne de la bande.

Ainsi, on peut appliquer une bande de gomme sur une ébauche ayant déjà une forme générale torique correspondant sensiblement à la forme finale du pneumatique. En effet, sur une ébauche ayant cette forme, plus particulièrement sur une partie de l'ébauche destinée à former un flanc du pneumatique, la bande est appliquée sur cette partie le long d'un trajet circulaire de façon à présenter des bords radialement interne et externe de rayons différents. Du fait que la gomme appliquée par le rouleau est relativement chaude et dans un état viscoélastique, la vitesse circonférentielle du rouleau sensiblement égale à la vitesse circonférentielle du bord radialement interne de la bande provoque un étirement de la bande de gomme le long de son bord radialement externe, ceci de façon que la bande appliquée soit plane et ne présente pas de plis.

Selon une autre caractéristique optionnelle du procédé selon l'invention, l'extrudeuse comprenant une vis sans fin d'extrusion de la gomme, on coupe un tronçon de bande, après application de ce tronçon sur l'ébauche de pneumatique, en faisant tourner la vis sans fin dans un sens inverse à un sens d'extrusion.

En utilisant la vis sans fin en sens inverse du sens d'extrusion, on évite de recourir à des moyens supplémentaires de découpage de la bande de gomme.

Avantageusement, avant ou après application d'un tronçon de bande sur l'ébauche de pneumatique, on fait tourner le rouleau dans un sens opposé à un sens d'extrusion et d'application de la bande.

Cette rotation du rouleau dans le sens opposé au sens d'extrusion permet d'optimiser la forme du front de gomme.

L'invention a encore pour objet un procédé tel que défini ci-dessus au moyen d'une installation telle que définie ci-dessus comprenant un dispositif comprenant deux extrudeuses munies chacune d'un rouleau et des moyens de sollicitation du rouleau contre l'ébauche, les deux extrudeuses étant disposées de part et d'autre d'un plan axial médian de l'ébauche de façon, l'ébauche ayant une forme générale de révolution, à pouvoir appliquer des bandes de gomme sur deux parties de l'ébauche symétriques par rapport au plan axial médian de cette ébauche, caractérisé en ce que l'on applique simultanément une bande de gomme sur chaque partie de l'ébauche.

L'invention sera mieux comprise à la lecture de la description qui va suivre, donnée uniquement à titre d'exemple non limitatif et faite en se référant aux figures dans lesquelles :
- la figure 1 est une vue en perspective d'une installation selon l'invention ;
- la figure 2 est une vue de détail de la partie désignée par la flèche I de la figure 1 montrant des moyens de sollicitation ;
- la figure 3 est une vue de détail de la partie désignée par la flèche II de la figure 1 montrant des moyens de rouletage ;
- la figure 4 est une vue en coupe d'un rouleau d'extrudeuse d'un dispositif pour l'application d'une bande de gomme de l'installation représentée à la figure 1.
- la figure 5 est une vue suivant la flèche V de la figure 4 du rouleau d'extrudeuse.

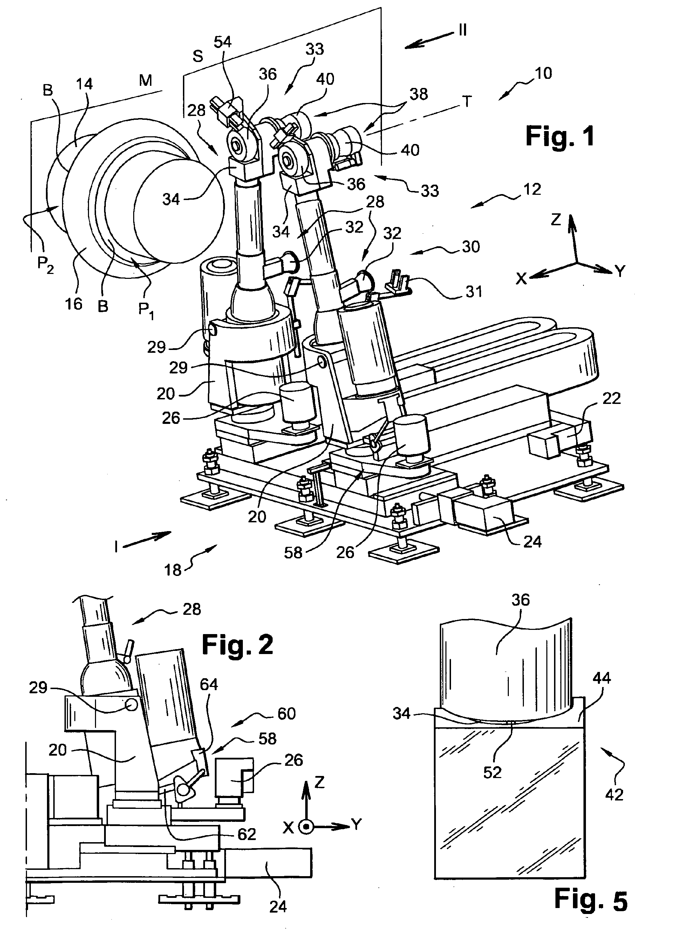

On a représenté sur la figure 1 une installation selon l'invention pour l'application d'une bande de gomme sur une ébauche de pneumatique. Cette installation est désignée par la référence générale 10.

L'installation 10 comprend un dispositif 12 pour l'application d'une bande B de gomme, ainsi qu'un support rotatif 14 portant une ébauche crue 16 de pneumatique présentant une forme générale torique proche de celle du pneumatique vulcanisé.

L'ébauche 16, représentée à titre d'exemple sur la figure 1, est destinée à former, une fois vulcanisée, un pneumatique pour véhicule à deux roues.

L'ébauche 16 est entraînée en rotation autour de son axe par le support rotatif 14.

Le dispositif 12 comprend un ensemble robotisé 18. Cet ensemble robotisé 18 porte deux supports 20 disposés de part et d'autre d'un plan S.

On a représenté sur la figure 1 un trièdre d'axes X, Y, Z orthogonaux deux à deux tels que chaque support 20 est déplaçable parallèlement à l'axe X, à l'aide de moyens classiques motorisés 22, parallèlement à l'axe Y, à l'aide de moyens classiques motorisés 24, et autour d'un axe parallèle à l'axe Z à l'aide de moyens classiques motorisés 26.

On notera que le plan S est parallèle au plan X,Z.

Le dispositif 12 comprend également deux extrudeuses 28 disposées de part et d'autre du plan S. Chaque extrudeuse 28 est montée articulée autour d'un axe 29, porté par le support 20 correspondant, de façon à former un levier. L'axe 29 s'étend sensiblement parallèlement à l'axe X.

Chaque extrudeuse 28 comprend des moyens 30 d'alimentation de l'extrudeuse 28 en gomme. Ces moyens d'alimentation 30 comprennent des moyens 31 de guidage d'une masse de gomme non extrudée et des moyens 32 d'introduction de la masse de gomme non extrudée dans l'extrudeuse 28.

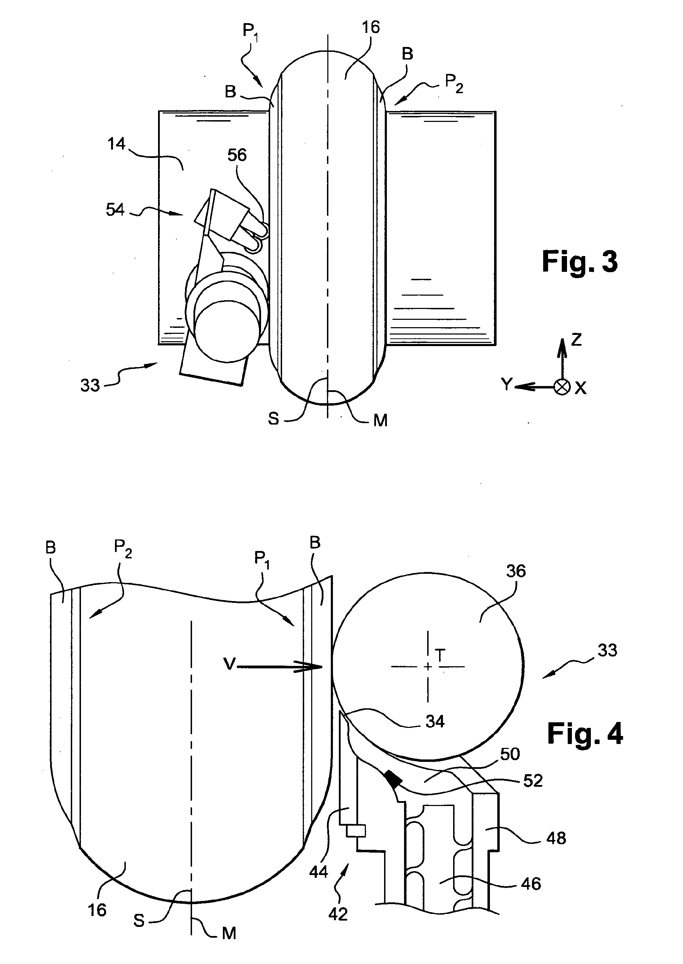

Chaque extrudeuse 28 comprend également une tête d'extrusion 33. Cette tête d'extrusion 33 est représentée plus en détail sur les figures 3 et 4.

La tête d'extrusion 33 comprend un orifice 34 qui permet la mise en forme de la bande B de gomme, ainsi que la sortie de cette bande B de l'extrudeuse 28.

L'orifice 34 est délimité par un rouleau 36. Comme représenté sur la figure 1, le rouleau 36 est monté rotatif sur l'extrudeuse 28 et est entraîné en rotation, autour d'un axe T, par des moyens 38. Ces moyens d'entraînement 38 comprennent, notamment, un moteur 40.

L'orifice 34 est également délimité par des moyens 42 de réglage du profil de la bande B de gomme. En l'espèce, ces moyens de réglage 42 comprennent une lame amovible 44.

Comme représenté sur la figure 4, chaque extrudeuse 28 comprend, de façon classique, une vis sans fin 46 montée rotative dans un corps 48. La vis 46 permet de mettre sous pression et de chauffer la gomme le long d'un canal 50 d'écoulement de la gomme. L'orifice 34 forme une extrémité débouchante du canal 50 au travers de laquelle la gomme est extrudée. Le canal 50 est muni d'au moins une saillie 52 de freinage localisé de l'écoulement de la gomme. En l'espèce, le canal 50 est muni d'une seule saillie de freinage localisé 52 qui est également représentée sur la figure 5.

Sur la figure 5, on voit que le rouleau 36 a une forme générale de révolution engendrée par rotation d'une courbe convexe autour de l'axe T. Le diamètre du rouleau 36 est maximal sensiblement au milieu de ce rouleau 36.

Dans l'exemple représenté sur les figures 1 et 3, la tête d'extrusion 33 comprend également des moyens 54 de rouletage de la bande B de gomme contre l'ébauche 16. Ces moyens de rouletage 54 comprennent, par exemple, deux roulettes 56.

Comme représenté sur les figures 1 et 2, des moyens 58 affectés à chaque extrudeuse 28, agissent sur cette extrudeuse 28 formant levier de façon à solliciter le rouleau 36 contre l'ébauche 16. De cette façon, le rouleau 36 forme un applicateur de la bande B de gomme contre l'ébauche 16.

Les moyens de rouletage 54 étant solidaires de la tête 33 de l'extrudeuse 28, ils sont sollicités (par les moyens 58) contre l'ébauche 16 conjointement avec le rouleau 36.

Les moyens de sollicitation 58 sont disposés de façon que les deux extrudeuses 28 puissent appliquer deux bandes B de gomme sur deux parties P₁ et P₂ de l'ébauche 16 correspondant à des flancs du futur pneumatique. Ces parties P₁ et P₂ sont symétriques par rapport à un plan axial médian moyen M de l'ébauche 16 comme cela est représenté sur la figure 1.

Les moyens de sollicitation 58 comprennent, comme cela est représenté sur la figure 2, un ensemble formant bras articulé 60 muni d'une première extrémité 62 reliée au support 20 et d'une seconde extrémité 64 reliée à une extrémité de l'extrudeuse 28 opposée à la tête 33 par rapport à l'axe 29.

Chaque extrudeuse 28 de l'installation 10 permet d'appliquer la bande B de gomme sur l'ébauche 16 de pneumatique conformément au procédé dont on précisera ci-dessous les principaux aspects liés à l'invention.

Tout d'abord, on place le support 14 à proximité du dispositif 12 de façon que l'ébauche 16 s'étende partiellement entre les extrudeuses 28, le plan S du dispositif 12 coïncidant avec le plan axial médian moyen M de l'ébauche 16.

Puis, on sollicite le rouleau 36 contre l'ébauche 16 de façon que ce rouleau 36 forme un applicateur de la bande B de gomme contre l'ébauche 16. On applique alors la bande de gomme B sur une partie de l'ébauche 16 (par exemple un flanc) de la façon suivante.

On synchronise entre elles les vitesses de rotation du support 14 et du rouleau rotatif 36. Eventuellement, on chauffe la bande B de gomme extrudée en chauffant le rouleau 36 grâce à des moyens classiques non représentés.

On dépose alors la bande B, sur l'ébauche 16 de pneumatique le long d'un trajet circulaire. Du fait de son trajet circulaire, la bande B présente des bords radialement interne et externe de rayons différents. De préférence, on synchronise entre elles les vitesses de rotation du support 14 et du rouleau 36 de façon que la vitesse circonférentielle du rouleau 36 soit sensiblement égale à la vitesse circonférentielle d'un bord interne de la bande B.

Après application d'un tronçon de bande B de gomme sur l'ébauche 16, on coupe ce tronçon en faisant tourner la vis 46 dans un sens inverse à un sens d'extrusion de la gomme. De préférence, pour optimiser la forme du front de gomme après coupure de la bande B, on fait tourner le rouleau 36 dans un sens inverse à un sens d'extrusion et d'application de la bande B.

On notera que, avant l'application du tronçon de bande B sur l'ébauche 16, on peut également prévoir de faire tourner le rouleau 36 dans le sens inverse du sens d'extrusion.

On notera également que l'on peut appliquer simultanément deux bandes B de gomme sur les deux parties P₁, P₂ de l'ébauche 16.

L'exemple de mise en oeuvre de l'invention faisant l'objet de la présente description concerne la fabrication d'une ébauche de pneumatiques pour véhicule à deux roues. Pour cette application particulière, l'invention permet d'appliquer très facilement une bande de gomme le long d'un trajet circulaire tel que la bande présente, le long de ce trajet, des bords de rayons différents, ceci du fait que la gomme est encore chaude lorsqu'elle est appliquée contre l'ébauche. Cet avantage est particulièrement utile pour tenir compte de la forme généralement torique d'une ébauche de pneumatique de véhicule à deux roues, notamment de la forme généralement bombée du sommet de cette ébauche, qui impose des trajets circulaires d'application de bande de gomme tels que celui évoqué plus haut.

On comprendra aisément que l'invention ne se limite pas au mode de réalisation précédemment décrit et peut également être mise en oeuvre pour la fabrication de tout type d'enveloppe de pneumatique, par exemple un véhicule de tourisme, une camionnette ou bien encore un poids lourd.

De plus, la bande B peut être déposée sur toute partie de l'ébauche 16, par exemple sur le sommet de l'ébauche 16 (future bande de roulement du pneumatique), le long d'un trajet circulaire ou non.

## Revendications

1. Dispositif (12) pour l'application d'une bande (B) de gomme sur une ébauche (16) de pneumatique, du type comprenant au moins une extrudeuse (28) de gomme munie d'un orifice (34) d'extrusion, pour la mise en forme de la bande (B) de gomme et la sortie de cette bande (B) de l'extrudeuse (28), cet orifice (34) d'extrusion étant délimité par un rouleau (36) monté rotatif sur l'extrudeuse (28), **caractérisé en ce qu'**il comprend des moyens (58) de sollicitation du rouleau (36) contre l'ébauche (16) de façon que ce rouleau (36) forme un applicateur de la bande (B) de gomme contre l'ébauche (16).

2. Dispositif (12) selon la revendication 1, dans lequel le rouleau (36) a une forme générale de révolution engendrée par rotation d'une courbe convexe autour d'un axe (T) formant axe de rotation de ce rouleau (36), de façon que le diamètre du rouleau (36) soit maximal sensiblement au milieu de ce rouleau (36).

3. Dispositif (12) selon la revendication 1 ou 2, dans lequel l'orifice (34) forme l'extrémité débouchante (34) d'un canal (50) d'écoulement de gomme, ce canal (50) étant muni d'au moins une saillie (52) de freinage localisé de l'écoulement de la gomme.

4. Dispositif (12) selon l'une quelconque des revendications précédentes, dans lequel l'extrudeuse (28) est montée articulée autour d'un axe (29) de façon à former un levier sur lequel agissent les moyens (58) de sollicitation du rouleau (36).

5. Dispositif (12) selon la revendication 4, dans lequel des moyens (54) de rouletage de la bande (B) de gomme contre l'ébauche (16) sont solidaires de l'extrudeuse (28) de façon à être sollicités contre l'ébauche (16) conjointement avec le rouleau (36).

6. Dispositif (12) selon la revendication 4 ou 5, dans lequel l'axe (29) d'articulation de l'extrudeuse est porté par un support (20) faisant partie d'un ensemble (18) robotisé.

7. Dispositif (12) selon l'une quelconque des revendications précédentes, comprenant deux extrudeuses (28) munies chacune d'un rouleau (36) et de moyens (58) de sollicitation du rouleau (36) contre l'ébauche, les deux extrudeuses (28) étant disposées de part et d'autre d'un plan (M) axial médian de l'ébauche de façon, l'ébauche (16) ayant une forme générale de révolution, à pouvoir appliquer des bandes (B) de gomme sur deux parties (P₁, P₂) de l'ébauche (16) symétriques par rapport au plan (M) axial médian de cette ébauche (16).

8. Installation (10) pour l'application d'une bande (B) de gomme sur une ébauche (16) de pneumatique, **caractérisée en ce qu'**elle comprend un dispositif (12) selon l'une quelconque des revendications précédentes et un support rotatif (14) de l'ébauche (16).

9. Procédé pour l'application d'une bande (B) de gomme sur une ébauche (16) de pneumatique au moyen d' au moins une extrudeuse (28) de gomme munie d'un orifice (34) d'extrusion, pour la mise en forme de la bande (B) de gomme et la sortie de cette bande (B) de l'extrudeuse (28), cet orifice (34) d'extrusion étant délimité par un rouleau (36) monté rotatif sur l'extrudeuse (28), **caractérisé en ce que** l'on sollicite le rouleau (36) contre l'ébauche (16) de façon que ce rouleau (36) forme un applicateur de la bande (B) de gomme contre l'ébauche (16).

10. Procédé selon la revendication 9, dans lequel, l'ébauche étant supportée par un support rotatif (14), on synchronise entre elles les vitesses de rotation des support (14) et rouleau (36) rotatifs.

11. Procédé selon la revendication 10, dans lequel, la bande (B) étant appliquée sur l'ébauche (16) de pneumatique le long d'un trajet circulaire tel que la bande (B) présente le long de ce trajet des bords radialement interne et externe de rayons différents, on synchronise entre elles les vitesses de rotation des support (14) et rouleau (36) rotatifs de façon que la vitesse circonférentielle du rouleau (36) soit sensiblement égale à la vitesse circonférentielle du bord interne de la bande (B).

12. Procédé selon l'une quelconque des revendications 9 à 11, dans lequel, l'extrudeuse (28) comprenant une vis sans fin (46) d'extrusion de la gomme, on coupe un tronçon de bande (B), après application de ce tronçon sur l'ébauche (16) de pneumatique, en faisant tourner la vis sans fin (46) dans un sens inverse à un sens d'extrusion.

13. Procédé selon l'une quelconque des revendications 9 à 12, dans lequel, avant ou après application d'un tronçon de bande (B) sur l'ébauche (16) de pneumatique, on fait tourner le rouleau (36) dans un sens opposé à un sens d'extrusion et d'application de la bande (B).

14. Procédé selon l'une quelconque des revendications 9 à 13 au moyen d'une installation selon la revendication 8 comprenant un dispositif selon la revendication 7, **caractérisé en ce que** l'on applique simultanément une bande (B) de gomme sur chaque partie (P₁, P₂) de l'ébauche (16).

## Claims

1. Device (12) for applying a strip (B) of rubber to a rough form (16) of tyre, of the type comprising at least one rubber extruder (28) equipped with an extrusion orifice (34), for shaping the strip (B) of rubber and allowing this strip (B) to leave the extruder (28), this extrusion orifice (34) being delimited by a roller (36) mounted to rotate on the extruder (28), **characterized in that** it comprises means (58) of urging the roller (36) against the rough form (16) in such a way that this roller (36) forms an applicator that applies the strip (B) of rubber against the rough form (16).

2. Device (12) according to Claim 1, in which the roller (36) has an overall shape that exhibits symmetry of revolution generated by rotating a convex curve about an axis (T) that forms the axis of rotation of this roller (36) so that the diameter of the roller (36) is at its maximum substantially in the middle of this roller (36).

3. Device (12) according to Claim 1 or 2, in which the orifice (34) forms the open end (34) of a rubber flow channel (50), this channel (50) being provided with at least one projection (52) that locally slows the flow of the rubber.

4. Device (12) according to any one of the preceding claims, in which the extruder (28) is mounted articulated about an axis (29) so as to form a lever on which the means (58) that urge the roller (36) act.

5. Device (12) according to Claim 4, in which the means (54) for pressing the strip (B) of rubber against the rough form (16) are secured to the extruder (28) in such a way as to be urged against the rough form (16) together with the roller (36).

6. Device (12) according to Claim 4 or 5, in which the axis (29) of articulation of the extruder is borne by a support (20) that forms part of an automated assembly (18).

7. Device (12) according to any one of the preceding claims, comprising two extruders (28) each equipped with a roller (36) and with means (58) for urging the roller (36) against the rough form, the two extruders (28) being positioned one on each side of a median axial plane (M) of the rough form so that, with the rough form (16) having an overall shape that exhibits symmetry of revolution, they apply strips (B) of rubber to two parts (P₁, P₂) of the rough form (16) that are symmetric about the median axial plane (M) of this rough form (16).

8. Installation (10) for applying a strip (B) of rubber to a rough form (16) of tyre, **characterized in that** it comprises a device (12) according to any one of the preceding claims and a rotary support (14) for the rough form (16).

9. Method for applying a strip (B) of rubber to a rough form (16) of tyre by means of at least one rubber extruder (28) equipped with an extrusion orifice (34), for shaping the strip (B) of rubber and allowing this strip (B) to leave the extruder (28), this extrusion orifice (34) being delimited by a roller (36) mounted to rotate on the extruder (28), **characterized in that** the roller (36) is urged against the rough form (16) in such a way that this roller (36) forms an applicator that applies the strip (B) of rubber against the rough form (16).

10. Method according to Claim 9, in which, with the rough form being supported by a rotary support (14), the rotational speeds of the rotary support (14) and of the rotary roller (36) are synchronized with one another.

11. Method according to Claim 10, in which, with the strip (B) being applied to the rough form (16) of tyre along a circular path such that the strip (B) along this path has radially internal and external edges of different radii, the rotational speeds of the rotary support (14) and of the rotary roller (36) are synchronized with one another so that the circumferential speed of the roller (36) is substantially equal to the circumferential speed of the internal edge of the strip (B).

12. Method according to any one of Claims 9 to 11, in which with the extruder (28) comprising an endless screw (46) for extruding the rubber, a length of strip (B) is cut, once this length has been applied to the rough form (16) of tyre, by rotating the endless screw (46) in the opposite direction to the extrusion direction.

13. Method according to any one of Claims 9 to 12, in which, before or after a length of strip (B) is applied to the rough form (16) of tyre, the roller (36) is turned in the opposite direction to the direction for extruding and applying the strip (B).

14. Method according to any one of Claims 9 to 13 using an installation according to Claim 8 comprising a device according to Claim 7, **characterized in that** a strip (B) of rubber is applied simultaneously to each part (P₁, P₂) of the rough form (16).

## Patentansprüche

1. Vorrichtung (12) zum Aufbringen eines Gummibands (B) auf einen Reifenrohling (16) des Typs, der mindestens eine Gummiextrusionsmaschine (28) aufweist, die mit einer Extrusionsöffnung (34) zum Formen des Gummibands (B) und Austreten dieses Bands (B) aus der Extrusionsmaschine (28) versehen ist, wobei diese Extrusionsöffnung (34) von einer Walze (36) abgegrenzt ist, die auf der Extrusionsmaschine (28) drehend montiert ist, **dadurch gekennzeichnet, dass** sie Mittel (58) zum Beanspruchen der Walze (36) gegen den Rohling (16) derart aufweist, dass die Walze (36) einen Anleger des Gummibands (B) gegen den Rohling (16) bildet.

2. Vorrichtung (12) nach Anspruch 1, bei der die Walze (36) eine allgemeine Rotationsform hat, die durch Drehen einer konvexen Kurve um eine Achse (T), die die Rotationsachse dieser Walze (36) bildet, derart erzeugt wird, dass der Durchmesser der Walze (36) im Wesentlichen in der Mitte dieser Walze (36) maximal ist.

3. Vorrichtung (12) nach Anspruch 1 oder 2, bei der die Öffnung (34) das mündende Ende (34) eines Gummifließkanals (50) bildet, wobei dieser Kanal (50) mit mindestens einem Vorsprung (52) zum lokalen Bremsen des Fließens des Gummis versehen ist.

4. Vorrichtung (12) nach einem der vorhergehenden Ansprüche, bei der die Extrusionsmaschine (28) um eine Achse (29) angelenkt derart montiert ist, dass ein Hebel gebildet wird, auf welchem die Mittel (58) zum Beanspruchen der Walze (36) einwirken.

5. Vorrichtung (12) nach Anspruch 4, bei der Mittel (54) zum Andrücken des Gummibands (B) gegen den Rohling (16) fest mit der Extrusionsmaschine (28) derart verbunden sind, dass sie gemeinsam mit der Walze (36) gegen den Rohling (16) beansprucht werden.

6. Vorrichtung (12) nach Anspruch 4 oder 5, bei der die Anlenkachse (29) der Extrusionsmaschine von einem Träger (20) getragen wird, der Teil einer Einheit (18) in Robotertechnik ist.

7. Vorrichtung (12) nach einem der vorhergehenden Ansprüche, die zwei Extrusionsmaschinen (28) aufweist, die jeweils mit einer Walze (36) und Mitteln (58) zum Beanspruchen der Walze (36) gegen den Rohling versehen sind, wobei die zwei Extrusionsmaschinen (28) zu beiden Seiten einer axialen mittleren Ebene (M) des Rohlings derart angeordnet sind, dass, wobei der Rohling (16) eine allgemeine Rotationsform hat, die Gummibänder (B) auf zwei Teilen (P₁, P₂) des Rohlings (16) symmetrisch zu der axialen mittleren Ebene (M) dieses Rohlings (16) aufgebracht werden können.

8. Anlage (10) zum Aufbringen eines Gummibands (B) auf einen Reifenrohling (16), **dadurch gekennzeichnet, dass** sie eine Vorrichtung (12) nach einem der vorhergehenden Ansprüche und einen Drehträger (14) des Rohlings (16) aufweist.

9. Verfahren zum Aufbringen eines Gummibands (B) auf einen Reifenrohling (16) mittels mindestens einer Gummiextrusionsmaschine (28), die mit einer Extrusionsöffnung (34) zum Formen des Gummibands (B) und Austreten dieses Gummibands (B) aus der Extrusionsmaschine (28) versehen ist, wobei diese Extrusionsöffnung (34) von einer Walze (36) abgegrenzt ist, die drehend auf der Extrusionsmaschine (28) montiert ist, **dadurch gekennzeichnet, dass** man die Walze (36) gegen den Rohling (16) derart beansprucht, dass die Walze (36) einen Anleger des Gummibands (B) gegen den Rohling (16) bildet.

10. Verfahren nach Anspruch 9, bei dem man, während der Rohling von einem Drehträger (14) getragen wird, die Drehzahlen des Drehträgers (14) und der Drehwalze (36) miteinander synchronisiert.

11. Verfahren nach Anspruch 10, bei dem man, während das Band (B) auf den Reifenrohling (16) entlang eines kreisförmigen Verlaufs derart aufgebracht wird, dass das Band (B) entlang dieses Verlaufs radial interne und externe Ränder mit unterschiedlichen Radien aufweist, die Drehzahlen des Drehträgers (14) und der Drehwalze (36) derart miteinander synchronisiert, dass die Umfangsgeschwindigkeit der Walze (36) im Wesentlichen gleich der Umfangsgeschwindigkeit des internen Rands des Bands (B) ist.

12. Verfahren nach einem der Ansprüche 9 bis 11, bei dem man, wobei die Extrusionsmaschine (28) eine Schnecke (46) zum Extrudieren des Gummis aufweist, einen Bandabschnitt (B) nach dem Aufbringen dieses Bandabschnitts auf den Reifenrohling (16) abschneidet, indem man die Schnecke (46) in eine zu der Extrusionsrichtung umgekehrte Richtung drehen lässt.

13. Verfahren nach einem der Ansprüche 9 bis 12, bei dem man, vor oder nach dem Aufbringen eines Bandabschnitts (B) auf den Reifenrohling (16) die Walze (36) in eine umgekehrte Richtung zu der Extrusions- und Aufbringrichtung des Bands (B) drehen lässt.

14. Verfahren nach einem der Ansprüche 9 bis 13 mittels einer Anlage nach Anspruch 8, die eine Vorrichtung nach Anspruch 7 aufweist, **dadurch gekennzeichnet, dass** man gleichzeitig ein Gummiband (B) auf jeden Teil (P₁, P₂) des Rohlings (16) aufbringt.
